# EUROPEAN PATENT APPLICATION

(11) **EP 2 813 953 A1**
(43) Date of publication of application: **17.12.2014**
(21) Application number: 13171759.7
(22) Date of filing: 12.06.2013
(51) Int. Cl.: G06F 17/30

(54) **Accessing data relating to topics**

(71) Applicant: STV Central Limited, Glasgow G51 1PQ (GB)
(72) Inventor: Milne, David, Glasgow, G51 1PQ (GB); Kinsella, Michael, Glasgow, G51 1PQ (GB); Macdonell, Kevin, Glasgow, G51 1PQ (GB)
(74) Representative: Hindle, Alistair Andrew

(57) **Abstract**

There is disclosed a computer-implemented method of operating a user device (100) to access data relating to at least one of a plurality of topics, the method comprising: transmitting (S400) from the user device (100) a request for topic data, the request including a topic identifier identifying a selected topic from the plurality of topics; receiving (S402) at the user device (100), in response to the request for topic data, core topic data defining at least one property of the selected topic; storing (S404) the core topic data in a topic database associated with the user device; receiving (S406) at the user device supplementary topic data associated with at least the selected topic; and in response to a request to access the selected topic, outputting (S408) the core topic data and the supplementary topic data (for example to a user via a display). A corresponding method of operating a server (104) is also disclosed, as well as a user device (100), a server (104) and a system employing the above-mentioned methods.

## Description

### Field of the invention

The present invention relates to a method of accessing topics on a user device in conjunction with a server. The invention also relates to a user device, a server, a computer-readable medium and a system.

### Background to the invention

The term 'topic' as used herein preferably connotes a subset or an instance of a particular category of information, preferably one that may have some interest to a user of a device. A topic may for example have one or more properties, such as a name, description, contact details, image, location, and access information.

Conventionally if a user seeks information on a topic using a user device, there are a number of possibilties. One possibility is to use a web browser and search engine to carry out a search for a particular topic, such as a restaurant, an event, a film or a venue. For a complete range of information on that topic, a user may have to separately search for and view an online map, a review site, a website operated by the topic in question (if it exists), and so on, with no effective way of finding (or being confident of the results being) the most relevant, accurate or up-to-date information. Once the search process is complete, it is possible to store a series of bookmarks to the relevant pages to allow the topic to be revisited in future, but accessing all the information via multiple bookmarks is still very unwieldy, and requires a considerable amount of data to be downloaded in excess of the desired information. This can introduce unnecessary delay and also cost, as network usage can be expensive or even restricted if using a portable device such as a mobile telephone.

Alternatively, web pages and the like can be cached in some form, for example by taking a screenshot, so that a copy is retained locally. In this case, however, more storage is required locally than strictly necessary, and for a mobile device this can be onerous and restrictive. In addition, cached data can become out of date and there is no easy way to maintain up-to-date information, especially with multiple bookmarks to multiple pages which typically all operate in different ways with no interconnectivity.

The present invention seeks to address these and other problems in the prior art.

### Summary of the invention

In a first aspect of the invention, there is provided a computer-implemented method of operating a user device to access data relating to at least one of a plurality of topics, the method comprising: transmitting from the user device a request for topic data, the request including a topic identifier identifying a selected topic from said plurality of topics; receiving at the user device, in response to the request for topic data, core topic data defining at least one property of the selected topic; storing the core topic data in a topic database associated with the user device; receiving at the user device supplementary topic data associated with at least the selected topic; and in response to a request to access the selected topic, outputting the core topic data and the supplementary topic data.

This can result in more efficient storage of topic data in (or accessible to) the user device, and can provide more flexibility in the distribution of topic data to the user device. The transfer of core topic data in a single step (rather than, for example, sourced from various different sources in different transmissions as with the web site example) also makes a simpler and more efficient use of the communication link.

Examples of topics as used herein include instances of venues, restaurants, films, events, offers, reviews, and so on. In some embodiments a topic may be considered more broadly to be any self-contained unit of information. The aforementioned plurality of topics may for example correspond to a defined or dynamic corpus of information, and may relate to the sum of information contained in a particular database or other form of stored data.

It will be appreciated that actions in relation to selecting and identifying a single topic, and the like, may be extended to multiple topics, whereby the core topic data and supplementary topic data may for example relate to multiple selected topics. The method is suitable for use with a user device, which may be a stand-alone or portable computer, mobile telephone, other type of handset, and so on. The topic database is preferably located in the user device, but may be remote from the user device, for example accessed via a network or other connection, and may incorporate "cloud" technology. The topic database may in one embodiment be located within a server that is operable to respond to the request for topic data, and there may for example be a single topic database within the system, or multiple databases with variable levels of duplication of topic data to provide an appropriate balance between ease of access and economy of storage. The term database preferably connotes any structured collection of data and need not be a database in any more formal sense. The topic (or any other database) may as appropriate include additional data not referred to herein, and/or be distributed across different locations as necessary or appropriate.

References to entities that are associated with user devices may in some embodiments instead be associated with users and/or user accounts (which may not have a static relationship to a user device, for example depending on when and where a user "logs in", and/or may not have a one-to-one relationship with user devices, for example if a user is 'logged in' on multiple devices), and any reference to user device herein should be considered, where possible and appropriate, to be capable of this alternative interpretation.

The request to access the selected topic may be by means of a user interacting with an input device (such as a touchscreen, keyboard, or other appropriate input device), either locally to the user device or remotely (for example via a network or other connection). The outputting may be via a display or other form of user interface (including audio and/or visual, or any other appropriate form of interface). The topic identifier may be any appropriate form of data, such as a number or item of text, allowing the identification of a particular topic or set of topics. The step of outputting the core topic data and supplementary topic data may for example include combining the two sets of data, and formatting them appropriately. The step may also or alternatively comprise partitioning the data into separate pages or other entities for perusal by a user. Such partitioning or any other appropriate processing of the core topic data and/or supplementary topic data as herein described may be carried out each time the data is requested to be output (that is, when viewed by a user, for example), or only as often as the data is received or updated (and stored in the processed form for later use, for example), as is described further below.

The user device may be a desktop or portable computer, mobile telephone, other type of handset or computer, and so on. The method may for example constitute an application ('app') or other self-contained software module, which may be loaded into the user device and executed by any appropriate means, for example using the same communications link as is used for the transmission of the topic data, or otherwise.

The method may further comprise storing the supplementary topic data in the user topic database.

In one embodiment, the core topic data and/or supplementary data may be received (at least initially) from a different entity to the server, for example as a result of one user sharing the topic data with another user (for example via a social network service or website), and this may be an unsolicited transfer of data. Accordingly, the step of transmitting a request for topic data may be omitted or adapted as appropriate, for example so as to comprise (for example) receiving at the user device an indication of the origin of the topic data. The method may further comprise (in this or any other aspect) transmitting at least one of the topic identifier, core topic data and supplementary topic data to another user device (or other device), or transmitting a request to cause said topic identifier, core topic data and supplementary data to be so transmitted. The method may further include a step of accepting or refusing the data in dependence on user input, and/or filtering the received data in some fashion.

The method may further comprise receiving selection data identifying a selected topic from said plurality of topics, wherein the request for topic data is transmitted in response to receiving the selection data. The selection data may be provided by a user, for example using an interface of the user device, by other means, or from elsewhere such as a remote location which may be connected via a local or wide area network.

The core topic data is preferably sufficient to allow the user device to provide a first level of user interaction with the selected topic, in which case the supplementary topic data is sufficient to allow the user device to provide a second level of user interaction with the selected topic. The first level of functionality is preferably a minimum and/or acceptable, level of functionality (as explained elsewhere), and the second level of functionality is preferably an enhanced, or extended, level of functionality with respect to the first. The second level of functionality may, for example, consist of providing additional information to a user or (more preferably) providing further categories of information (such as reviews and offers relating to a selected venue, film or restaurant, in particular one example) to the user.

The method may further comprise transmitting a request for updated topic data in response to the request to access the selected topic, the request for updated topic data including the topic identifier. In this case, the supplementary topic data may be received (at least in part) in response to the request for updated topic data. This can allow dynamic or substantially realtime supplementary topic information (such as live status updates, webcam images, targeted advertisements, and so on) to be provided to the user device whenever the user accesses a particular topic. The request for updated topic data may for example be an API call and/or any appropriate feed method (such as RSS, Atom, and so on), which may be directed to the server, to a third party agent system, or any appropriate combination of the two.

The method may further comprise receiving updated core topic data and storing the updated core topic data in the user topic database, for example as a result of a curation or addition of topic data at the server (which may be done using a curator system, for example). The updating of the data may extend to the deletion of data, for example if a particular topic ceases to exist (in the case of a venue or restaurant), becomes irrelevant or otherwise falls outside the scope of the system (in the case of a venue that changes its function or pricing, for example), or has expired (more on which see elsewhere).

The method may further comprise transmitting an acknowledgement (preferably to a server centrally hosting the 'master' topic data, if applicable) that topic data (preferably supplementary topic data but also possibly the core topic data and/or updated topic data) has been received by the user device.

As noted above, the method may further comprise determining topic data that has expired, and accessing the user topic database to delete the determined expired topic data. The expiry of topic data (particularly part or all of the supplementary topic data) may be determined on the basis of time stamps (relating to a creation time or an expiry time, for example) included in the topic data, or otherwise. Alternatively or additionally, topic data can be rendered expired and/or deleted in response to an expiry request or other appropriate data received from the server or an appropriate third party system. Expiry requests such as these may be targeted at particular users, user devices, particular topics, particular categories of topic, or using any other appropriate criteria to determine the topic data to be expired/deleted.

In other aspects, the method may further comprise filtering and/or sorting the topic data in the user topic database, for example in accordance with a category of topic or by applying any appropriate criteria to at least one property of the topic data (such as an alphanumeric regular expression and the like), or by geographical location (for example selecting topics having a geographical correspondence within or without a particular area or within or without a particular distance from a particular location). The method may further comprise displaying a list of topics stored in the user device database, which may be filtered and/or sorted as aforesaid.

In this or any other aspect, the method may further comprise determining (which may involve estimating) the geographical location of the user device, and filtering topics (at the user device and/or at the server) in dependence on the determined geographical location. The filtering may be undertaken in dependence on any appropriate criteria, such as post code, city, absolute or relative Cartesian coordinates (for example determined using a GPS receiver and the like). Since the geographical location may change over time, the user may be presented with a different selection of cards when the user device is in different locations. At the same time, essentially irrelevant cards will be withheld from display, providing a more efficient display and usage of the device. In one embodiment, the cards are updated dynamically depending on the geographical determination (which may be undertaken by the user device and/or the server, with one optionally reporting the results of the determination to the other as appropriate), in which case the cards stored on the user device will be a subset of all of the cards associated with the user, and as the user (and user device) moves between locations, some cards are deleted and some others are downloaded as appropriate, allowing more efficient use of resources on the user device. In another embodiment, the cards which are filtered out on account of geographical location merely reside dormant on the device, meaning that less bandwidth is required for the dynamic updating of data on the user device.

A method will now be described in relation to a server that cooperates with a user device as aforesaid.

In particular, in a further aspect of the invention there is provided a computer-implemented method of operating a server to control data relating to at least one of a plurality of topics, the method comprising: receiving from a user device a request for topic data, the request including a topic identifier identifying a selected topic from said plurality of topics; accessing a server topic database to extract core topic data associated with the topic identifier and defining at least one property of the selected topic; transmitting the core topic data to the user device; storing the topic identifier in an account database in relation to a portion of the database associated with the user device; processing additional topic data to determine supplementary topic data associated with at least the selected topic; and transmitting the supplementary topic data to the user device.

In one embodiment the step of receiving a request for topic data may be omitted or adapted as appropriate in the event that one user (for example) shared the topic data directly with another user. In this case, the server may provide a more limited set of data, or may simply be notified that a user has received a particular set of core topic data so that the server can forward on any additional and/or supplementary topic data when the need arises.

The additional topic data may include data stored in the server topic database (and may be substantially the same as the supplementary topic data that is transmitted). Thus the system can be self-contained, and it will be appreciated that the separately recited steps of accessing data in relation to the core topic data and the supplementary topic data may, where appropriate, be combined so as to reduce the amount of data accessing and/or processing that is required. For example, one set of data may be retrieved from the server topic database, and may then be partitioned (at least in part) into core topic data and supplementary topic data, either in accordance with data contained within the server topic database or otherwise. In addition or alternatively, additional data may be introduced and/or some data may be discarded in the process of generating and/or transmitting the core topic data and supplementary topic data.

Alternatively, or additionally, the additional topic data may include external topic data received from an external agent. The 'external topic data' is preferably topic data of any form as described above that has an origin external to the server, and need not otherwise be distinctive. It will be appreciated that any data received from an external agent may also be stored in the server topic database for later use, so that only one transmission of topic data may be required from the external agent in total (unless or until the data is updated or superseded, for example).

The method may further comprise transmitting a notification to the external agent of the request for topic data, prior to receiving said external topic data. Thus the external agent may provide the additional/supplementary topic data on a dynamic and/or realtime basis in response to requests from a user device (or indeed any user device) to view a particular topic. Alternatively, the additional topic data may be provided by an external agent asynchronously or arbitrarily relative to the internal workings of the server, for example as soon as new topic data is created externally (such as a new review or offer), and this feature may advantageously be provided in relation to the previously mentioned feature of storing the externally-received additional topic data in the server topic database for further use. A decision may be made as to whether or not to store the additional topic data in the server topic database depending on the persistence of the additional topic data, which may for example be determined on the basis of an expiry time included in the additional topic data (for example data which is going to expire within a particular time-frame may be discarded) or on the basis of the category of information (where some categories of topic are stored and others are not, for example, especially if some categories are inherently more persistent than others).

The method may further comprise receiving (from a user device, preferably) a request for updated topic data, the request for updated topic data including the topic identifier. The above notification may be transmitted, if applicable, and the additional topic data may be received at least in part in response to the request for updated topic data. This can provide dynamic or substantially realtime topic data to the user device using a minimum of communications bandwidth, whilst avoiding the need to send redundant information such as the (essentially unchanging) core topic data. The request may be transmitted via any appropriate protocol, such as via an API call or via an appropriate feed method (such as RSS, Atom, and so on).

The method may further comprise storing data in the account database to indicate that at least one of the core topic data and supplementary topic data has been received by the user device. For example, account data relating to a particular user device (or user or user account as appropriate, as mentioned above) may include a record of topic data (core topic data and/or supplementary topic data in particular) which has been transmitted to a user device, and may further include a record of the topic data which has been acknowledged by the user device to have been received. This may assist, for example, in the case where the supplementary topic data (in particular, or also the core topic data) has been sent using a connectionless and/or unreliable communications protocol and retransmissions may be required. Accordingly the method may further comprise receiving an acknowledgement (which may include the topic identifier) from the user device in respect of at least the selected topic.

The account database may include a plurality of user identifiers which are associated with particular user devices (or users, and so on). It will be appreciated that, as before, the account database and server topic database need not have separate physical manifestations and may be the same database and/or may be distributed across different physical data stores as appropriate.

The method may further comprise receiving (for example from a curator system) updated core topic data, storing the updated core topic data in the server topic database, and transmitting the updated core topic data to the user device. As noted, such updated core topic data may, for example, be received from a curator system associated with the server. In addition or alternatively, topic data may be requested by and transmitted to the curator system, for example prior to the submission of updated data as part of an edit cycle. Further data access may be provided to the curator system or otherwise as appropriate to assist in the curation, creation, deletion and editing of the topic data. The method may comprise, more generally, accessing the account database to determine user devices associated with the selected topic (that has been updated), and transmitting the updated core topic data to at least some (and preferably all) said user devices. The method may further comprise filtering, sorting, pre-processing, or otherwise processing topic data arriving at the server from an external source, for example to select topic data meeting an appropriate standard or criteria.

The method may further comprise (for example as a maintenance and/or background task) accessing the server topic database to determine topic data that has expired, and deleting the determined expired topic data. Topic data that may expire may typically include offer topics and other forms of promotional topics. The expiry may be determined or specified by the server or curator sytem, and/or by an external agent, for example the agent system responsible for the topic data in question. The method may further comprise determining promotional data relevant to at least one of a selected topic, a selected user device, the core topic data and the supplementary topic data, and transmitting the promotional data to the user device.

Aspects of the invention generally applicable both to the user device and server as aforesaid will now be described.

The supplementary topic data may contain at least one reference to the core topic data.

The core topic data, meanwhile, is preferably self-contained, in the sense that it contains in general no references to the supplementary topic data, if not more broadly to any other entities. The term 'reference' in this context (and preferably as otherwise used herein in similar contexts) is preferably used in a database sense, being for example an identifier that relates to at least one record in another table, data set or database and which is preferably not sufficient to convey the intended information when processed in isolation of (that is, without being able to access) said other table, data set or database. The core topic data can thus be exploited (preferably fully) independently of the supplementary topic data. Accordingly, any delays in transmission of the supplementary topic data will not adversely affect the use of the core topic data.

Alternatively, the core topic data (for example relating to an event or a review) may comprise at least one reference to another topic (for example relating to a venue or a restaurant, respectively), in which case it may further comprise at least one property (such as contact details and address) extracted from the topic data associated with said other topic. This at least one property may for example include at least one of a name, contact details, location, and so on, and is preferably not a property that would normally be duplicated between related records in a database (such as a primary key/identifier, for example). Thus, at the expense of introducing some redundancy in the data (by having the property or properties in question duplicated between related records), the core topic data can be made self-contained if the duplicated properties are sufficient to obviate the need to access the related topic when the selected topic is displayed (for example to a user). Thus it is possible for a topic in a user topic database to be presented to a user in full without the related topic being necessarily present in the user topic database. Nevertheless, the reference to the related topic permits easy navigation if the related topic is indeed present, or ease of obtaining the related topic if it is not.

In the embodiment of the method relating to a user device, the method in that instance may further comprise determining whether or not a related topic is present in the user topic database, and obtaining topic property data from either the selected topic or the related topic data in dependence on the determination. The method may alternatively or additionally comprise repeating the method steps in relation to the related method in response to a determination of at least one of the related topic data being not present or being both not present and requested by a user (for example by clicking on a link to the related topic in a display of the selected topic, which may by further example be the case if a 'venue' card is clicked within an 'event' card, and the like).

It may be that the core topic data is sent in a first transmission, and the supplementary data is sent in a second transmission. The first and second transmissions may not be contiguous (that is, may not follow on immediately one after another). The second transmission may in any appropriate sense be asynchronous and/or uncoordinated with the first. This can provide more flexibility in transmitting data to the user device, especially if there is a substantial amount of supplementary data, which might otherwise require an impracticably large single transmission (causing significant bandwidth issues if the transmission is interrupted or corrupted and is required to be retransmitted).

In this instance, the first transmission and second transmission may be prioritised to give the first transmission a higher priority than the second transmission. This can ensure that essential (core) data is received with the greatest chance of success and/or shortest delay, whilst reducing the demands on the communications system in respect of transmitting less essential data. The prioritising may for example entail using a different communications protocol for the first and second transmissions, with one having a generally greater efficacy and/or compared to the other.

For example, the transmissions may for example be selected from connection-based (particularly the first transmission) or connectionless protocols (particularly the second transmission) which may be unidirectional or bidirectional protocols as appropriate. For example the first transmission may be conducted using an appropriate connection-based bidirectional protocol to ensure that the core topic data is delivered intact and promptly, and the second transmission may be any appropriate connectionless unidirectional protocol which may result in delays or data loss, the impact of which will be mitigated for data which is not 'core' data. Preferably the communications are controlled (for example using time-outs and repeated requests and the like) so as to ensure the eventual delivery of all of the core topic and supplementary topic data, though with a possible delay for the latter for the reasons given above.

Alternatively or additionally, the prioritising may be based on overall demand of the communications system, for example to send the second transmission at particular times of day (for example during the night) or when system demand is measured to be lower than a particular threshold.

At least one of the first and second transmissions may be divided into further transmissions. The transmissions may also be discontinuous, and may for example be fragmented. In one embodiment at least one of the transmissions (especially the second) may be transmitted during otherwise unused gaps in a multiplexed or other form of data stream (which may for example be a particular radiofrequency spectrum, such as may be used in mobile telephony and the like), while the other may be transmitted in a continuous or at least higher priority communication session or the like.

The supplementary topic data may relate to at least one topic other than the selected topic. For example, the supplementary topic data may include an aggregation of topic data that has been determined to be relevant to all or part of the core topic data stored in the user topic database. The same may also be true of the core topic data. For example a user might receive four sets of core topic data in four (or fewer) separate transmissions, and may then receive supplementary data relevant to all four topics in a single transmission (or at least fewer than four, and so on). This can reduce the number of transmissions required and can reduce demands on the communications system. Preferably said at least one topic is related in some way to the selected topic, facilitating the provision of useful information to a user without requiring further interaction from a user to select or to specify related topics.

Said at least one topic may be a different category of topic to the selected topic. The category may for example be at least one of an offer, a review, a venue, event, film or restaurant, and so on, and is not limited thereto.

The supplementary topic data may include at least one topic property and topic relationship data, the topic relationship data including an association between said at least one topic and at least the selected topic. Accordingly the supplementary topic need not be partitioned in the same way (or at all) as the core topic data, which may for example be arranged (or partitioned) in the database in dependence on the topic identifier. The supplementary topic data may for example be aggregated with supplementary topic data that has been received or transmitted in previous iterations of the method in respect of other selected topics, in which case the topic relationship data included in the aggregated supplementary topic data can serve to assist in the identification of supplementary topic data relevant to a particular selected topic.

In another aspect the invention provides a computer readable medium tangibly embodying computer program code which, when executed by a computer comprising a processor and associated memory that includes said computer program code, causes the computer to carry out a method as aforesaid.

A further aspect of the invention provides a user device comprising a processor and associated data storage, the data storage including computer program code and the processor being operable to execute said computer program code so as to carry out the method relating to the user device as aforesaid.

A yet further aspect of the invention provides a server comprising a processor and associated data storage, the data storage containing computer program code and the processor being operable to execute said computer program code so as to carry out the method relating to the server as aforesaid.

Another aspect of the invention provides a computer-implemented method of operating a user device to access data relating to at least one of a plurality of topics, the method comprising: transmitting from the user device a request for topic data, the request including a topic identifier identifying said selected topic; receiving at the user device core topic data associated with the selected topic, the core topic data being sufficient to allow the user device to provide a first level of functionality in relation to the selected topic; storing the core topic data in a user topic database; receiving at the user device supplementary topic data associated with the selected topic, the supplementary topic data being sufficient, in conjunction with the core topic data, to provide a second level of functionality in relation to the selected topic; and providing user access to the topic data in response to a user request, via whichever of the first and second levels of functionality is possible.

Similarly as mentioned above, the first level of functionality is preferably a minimum, or acceptable, level of functionality, and the second level of functionality is preferably an enhanced, or extended, level of functionality with respect to the first.

Preferably the request for topic data is transmitted in response to receiving selection data identifying a selected topic from said plurality of topics. The selection data may be provided by a user, for example using an interface of the user device, by other means, or from elsewhere such as a remote location which may be connected via a local or wide area network.

There may also be provided in a further aspect a system including a user device as aforesaid and a server as aforesaid. The system may further comprise a curator system in communication with the server for curating topic data in the server topic database. The system may also or additionally further comprise an external agent system operable to provide additional topic data to the server.

In a further, more general, aspect of the invention, there is provided a system (and corresponding method) for viewing at least one of a plurality of topics, the system comprising: a user device for viewing said at least one of a plurality of topics, the user device having a Deck associated with it for storing a plurality of Cards, each Card being associated with one of said plurality of topics and comprising a static data portion and a dynamic data portion; a static data server for storing said static data portion, wherein said user device is operable to receive said static data portion from said server in response when the relevant Card is added to the Deck, and to receive said dynamic data portion when the relevant Card is accessed by the user device. The user device and/or static data server preferably comprise a processor and associated memory and/or storage, the memory and/or storage containing computer program code which, when executed by the processor, causes the user device and/or static data server to operate as described. The user device may be operable to receive said dynamic portion from at least one further server in response to a request transmitted by the user device to said at least one further server.

This aspect may be provided independently in respect of the user device and/or static data server, corresponding essentially to the server as aforesaid.

Although the embodiments of the invention described above with reference to the drawings comprise methods performed by computer apparatus, and also computer apparatus, the invention also extends to program instructions, particularly program instructions on or in a carrier, adapted for carrying out the processes of the invention or for causing a computer to perform as the computer apparatus of the invention. Programs may be in the form of source code, object code, a code intermediate source, such as in partially compiled form, or any other form suitable for use in the implementation of the processes according to the invention. The carrier may be any entity or device capable of carrying the program instructions.

For example, the carrier may comprise a storage medium, such as a ROM, for example a CD ROM or a semiconductor ROM, or a magnetic recording medium, for example a floppy disc, hard disc, or flash memory, optical memory, and so on. Further, the carrier may be a transmissible carrier such as an electrical or optical signal which may be conveyed via electrical or optical cable or by radio or other means. When a program is embodied in a signal which may be conveyed directly by cable, the carrier may be constituted by such cable or other device or means.

Although various aspects and embodiments of the present invention have been described separately above, any of the aspects and features of the present invention can be used in conjunction with any other aspect, embodiment or feature where appropriate. For example apparatus features may where appropriate be interchanged with method features. References to single entities should, where appropriate, be considered generally applicable to multiple entities and vice versa. Unless otherwise stated herein, no feature described herein should be considered to be incompatible with any other, unless such a combination is clearly and inherently incompatible. Accordingly, it should generally be envisaged that each and every separate feature disclosed in the introduction, description and drawings is combinable in any appropriate way with any other unless (as noted above) explicitly or clearly incompatible.

### Description of the Drawings

An example embodiment of the present invention will now be illustrated with reference to the following figures in which:
Figure 1 is an overview of a system for accessing data relating to topics, including a user device and a server;
Figure 2 is a schematic of the user device of Figure 1;
Figure 3 is a schematic of the server of Figure 1;
Figure 4 is an overview of the data structure of a user topic database associated with a user device of Figure 1;
Figure 5 is an overview of the data structure of a server topic database associated with the server of Figure 1;
Figure 6 is an overview of the data structure of an account database associated with the server of Figure 1;
Figure 7 is an overview of the different types of data in use within the system of Figure 1;
Figure 8 is an overview of the data structure of a typical topic database associated with the server of Figure 1;
Figure 9 is a flowchart illustrating the operation of one aspect of a user device of Figure 1;
Figure 10 is a flowchart illustrating the operation of one aspect of the server of Figure 1;
Figure 11 is a flowchart illustrating the operation of one instance of step S1008 of Figure 10;
Figure 12 is a flowchart illustrating the operation of another instance of step S1008 of Figure 10;
Figure 13 is a flowchart illustrating the interaction between the server and the external agent system of Figure 1;
Figure 14 is a flowchart illustrating the interaction between the server and the curation system of Figure 1;
Figure 15 is a process diagram illustrating the data transmissions between a user device and the server of Figure 1;
Figures 16a to 16d are exemplary screenshots of an application running on the user device of Figure 1, showing a user interface for browsing topics;
Figure 17 is a schematic showing a typical arrangement of topic displays provided by an application running on the user device of Figure 1;
Figures 18a to 18f are exemplary screenshots of an application running on the user device of Figure 1, showing a user interface for browsing restaurant topics;
Figures 19a to 19d are exemplary screenshots of an application running on the user device of Figure 1, showing a user interface for browsing event topics;
Figures 20a to 20d are exemplary screenshots of an application running on the user device of Figure 1, showing a user interface for browsing venue topics;
Figures 21 a to 21 c are exemplary screenshots of an application running on the user device of Figure 1, showing a user interface for browsing film topics; and
Figures 22a and 22b are exemplary screenshots of an application running on the user device of Figure 1, showing a user interface for browsing nearby topics.

### Detailed Description of an Example Embodiment

In overview, in one embodiment an application ('app') may be provided to a user, to facilitate a service called 'The Deck'. Users have a Deck that is associated with them

(or a user device and/or personal account) and can add 'Cards' to their Deck. Cards may represent, for example, events, venues, movies and restaurants/food outlets. The Cards comprise (amongst other things and different categorisations) static information and dynamic information.

The static information is typically core information such as the name and description of a restaurant, the location of a venue, and so on. The dynamic information may include variable information associated with the Card content, such as (in one embodiment) latest reviews and offers at a restaurant, events at a venue, and so on. Other distinctions between and definitions of the different types of data are given below.

The static information is typically populated by a Content Management System (CMS) and manually created and uploaded by an editorial team. The dynamic information is typically populated via API calls and/or other feed methods generally associated with third-party partners such as event listings agencies, restaurant offers and reviews, mapping information, and so on. When a user views a Card it displays the static information associated in the CMS with that Card and polls dynamic information from an API or feed (and so on).

Cards can reference other Cards - for example, an event Card will contain a link to the corresponding venue Card; or a venue Card may contain links to nearby restaurants and their corresponding Cards. Cards can be 'expired', for example when an event has passed or a restaurant has closed down. This expiry can be pre-coded into the Card or activated remotely, for example. A 'gamification' mechanic can also be provided to reward the user for adding Cards - for example, having prize winning 'Golden Cards' triggered by user actions. Cards can be 'geofenced' to offer location-specific priority, offers, and so on. Users can also share Cards via social networks, or distribute them by other means. The Cards themselves or a link to the Cards may be sent.

Users can typically access their Cards on multiple platforms such as smartphones, tablets and desktop computers. The categories supported by Cards can be extended, for example to provide news content, with the static element being the information available to date, and the dynamic element being updates over time, allowing a user to follow a story via a Card.

Different embodiments and variants are of course possible in which the application and/or service is provided by different means, the 'Deck' and 'Card' are provided in different ways, and so on, as is explained in more detail elsewhere.

An embodiment will now be described in detail of a system such as that described above, for presenting information on a variety of topics to a user.

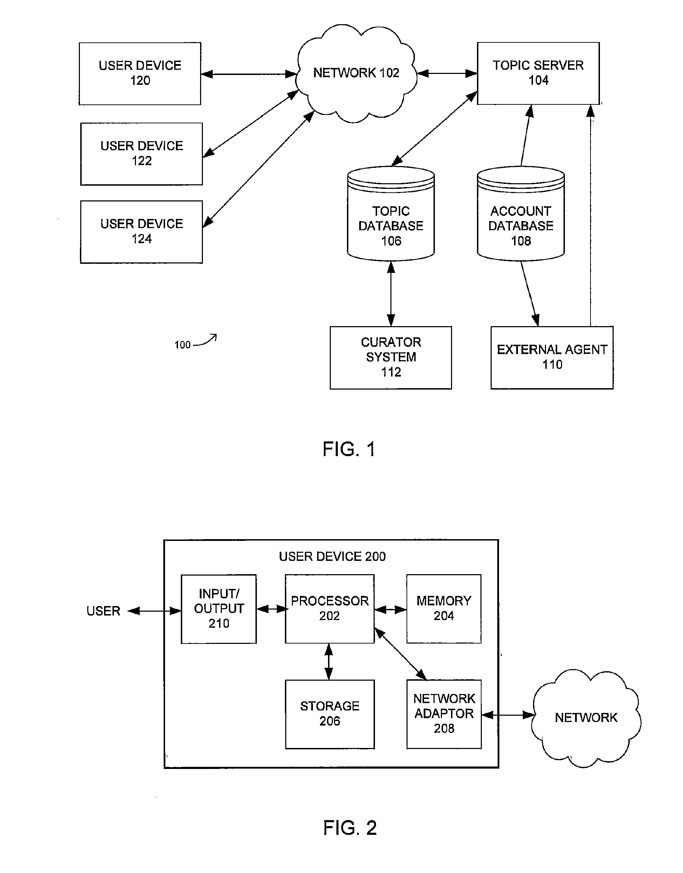

Figure 1 is an overview of a system for accessing data relating to topics, including a user device and a server. The system 100 includes a plurality of user devices 120, 122, 124 (for example a mobile telephone or other handset, a portable computer, desktop or fixed computer, and so on in any appropriate combination), a network 102 (which may for example be the Internet or another wide area network, a local area network, a WiFi or other wireless network such as a mobile telephone network, a wired network such as an Ethernet network, or any appropriate combination), the server 104 (which may be essentially any computer with access to appropriate storage and network connectivity), a topic database 106 and an account database 108 which are accessible by the topic server 104, an external agent system 110 and a curator system 112 (which may be any conventional computing hardware). More or fewer user devices may be provided as appropriate; in a typical mobile telephone network there may be a very large number of user devices (numbering in the millions, for example).

In use, the user devices 120, 122, 124 and the topic server 104 communicate via the network 102 (which may in one embodiment be replaced by a direct connection). The curator system 112 and/or external agent 110 may also communicate with the server 104 via the network 102 or any other network (not shown). The topic database 106 contains topic data relating to a variety of topics, as is explained in more detail below. Various portions of topic data.are transmitted to the user devices 120, 122, 124 in response to user requests, as will be explained in more detail below also.

In a preferred embodiment, the operation of the system 100 is controlled by software applications ('apps') executing on the user devices 120, 122, 124 which are preferably mobile telephones or computers (for user convenience). The apps may be downloaded to or installed on the devices 120, 122, 124 by any appropriate means.

Figure 2 is a schematic of the user device of Figure 1. The device 200 comprises a processor 202 (and may contain multiple processors, not shown), memory 204 (which may be volatile or non-volatile or both), a storage unit 206 (which may be combined with the memory 204 or omitted entirely, for example in a system using a single unit of flash memory or the like), a network adaptor 208 (which may be a dedicated network interface or otherwise, and may comprise multiple communications interfaces such as a WiFi interface and/or a radio transceiver), and an input/output unit 210 (which may be a series of interfaces) for communication with a user, for example via a display (which may be a touchscreen) and/or keyboard, or pointing device, and the like. In a preferred embodiment, the storage 206 of the user device 200 includes a user topic database for storing topic data received from the topic server 104 of Figure 1. In an alternative embodiment the user topic database is located elsewhere, for example remote from the user device. As will be explained below, the content of the user topic database (not shown) does not exactly replicate the content of the server topic database 106 of Figure 1.

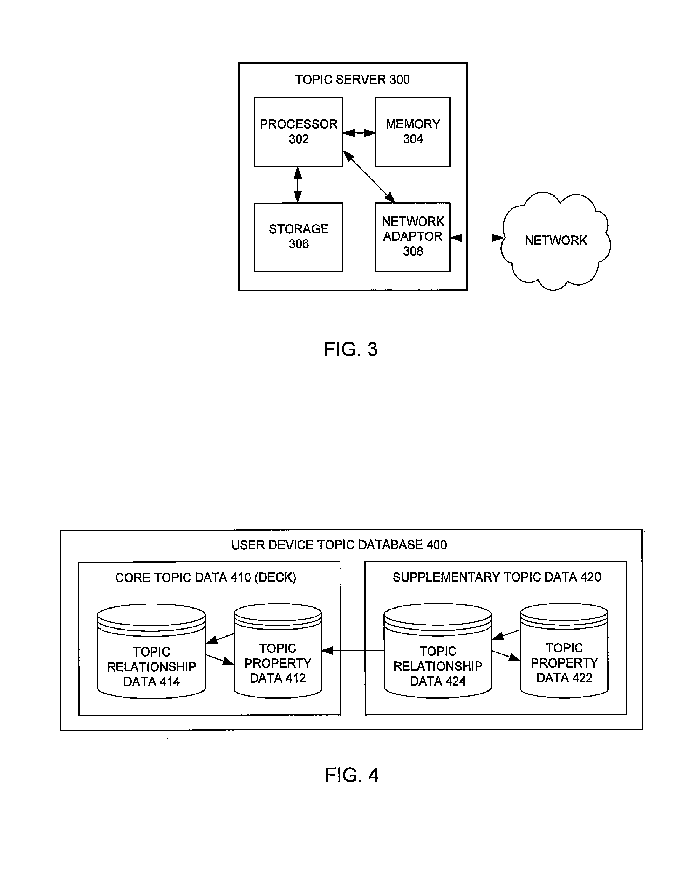

Figure 3 is a schematic of the server of Figure 1. The server 300 includes a processor 302, memory 304, storage unit 306 and network adaptor 308 for communicating with a network. As before, the memory 304 and storage unit 306 may be combined or one may be omitted. An input/output system may also be provided (not shown), though many server configurations are operated remotely via the network adaptor 308. The storage 306 may include the databases shown in Figure 1, or may suffice for local needs, with databases being provided in a separate unit (or distributed around a local or wide area network, for example, in accordance with conventional networking techniques).

The topic data used by the system comprises essentially two parts: topic property data, containing details of a particular topic (such as a name, contact details, location, and so on), and topic relationship data, describing associations between different topics (for example linking a review topic to a restaurant topic, or a film topic to a particular venue or set of venues). A typical arrangement of data within the databases mentioned above will now be described.

Figure 4 is an overview of the data structure of a user topic database associated with a user device of Figure 1. As noted above, this database is accessible to, and preferably located within, the user device. The user topic database 400 is divided at least conceptually into two parts: a core topic data portion 410 and a supplementary topic data portion 420. In the preferred embodiment, the core topic data portion 410 is referred to as a 'deck', holding 'cards' which correspond to the topic data relating to particular topics (as mentioned above). The process for adding cards to the deck is described below. Each of the portions 410, 420 of the database include topic property data 412, 424 and topic relationship data 414, 424 as mentioned above.

A key feature of the present system is that the core topic data 410 does not rely on any relationships to the supplementary topic data 420, but the supplementary topic data 420 may (though is not required to) depend on relationships to the core topic data 410. That is not to say that the core topic data 410 may not have a relationship to external topics (including supplementary topic data) which are either not present in the user database 400, but the dependency is removed by duplicating data from external topics within the core topic data.

For example, an event topic (relating for example to a performance by an artist at a venue) may include contact details for a venue (which, in the preferred embodiment, is a separate topic in its own right). Though the relationship data associated with the event topic contains a reference to another topic (the venue topic), the contact details of the venue topic will be duplicated within the core topic data of the event topic. This duplication may be carried out on-the-fly or otherwise dynamically by the server when transferring the event topic to the user device (in respect of which see further below). If the venue topic (or 'card') is later added to the user 'deck' in the user database, then the relevant fields of the event topic may be updated from the corresponding fields of the venue topic (in case they have changed since the venue topic was downloaded, though there are mechanisms to update this automatically, again see below), may be filled dynamically from the referenced topic (as would conventionally be the case in a properly arranged relationship database with linked tables), or may be left alone.

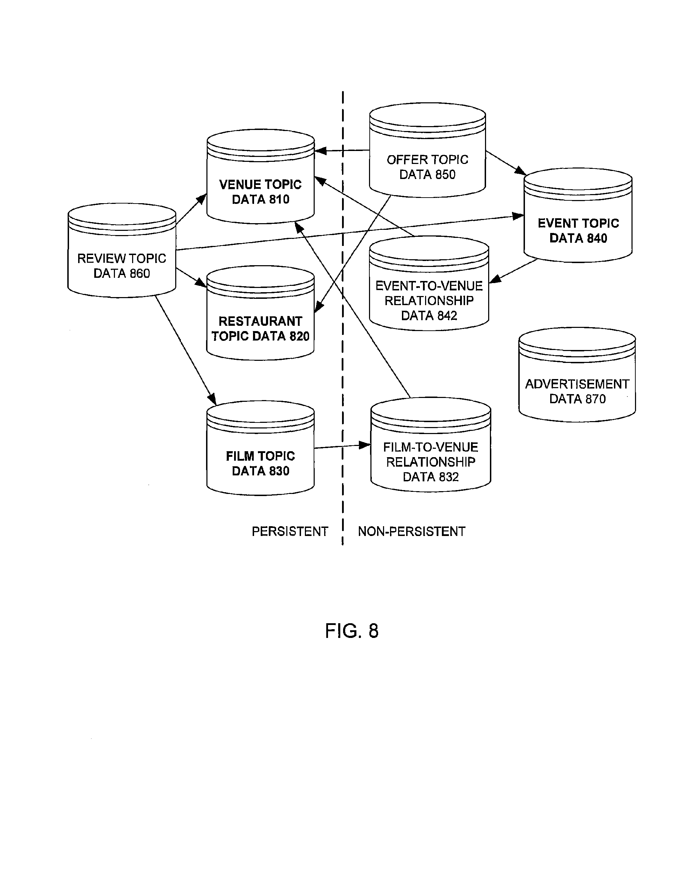

Conversely, if supplementary topic data such as a review is downloaded, it may contain a reference to another topic (such as a restaurant, event, venue or other related topic to which the review refers) which requires the presence of the other topic in order to be properly resolved. This is because the core topic data can be assumed to be present if a particular topic is downloaded. Conversely, the system can function perfectly well (and indeed may have to in some instances) if the supplementary data relating to a particular topic has not (yet) downloaded to the user device. It will be appreciated that the structure shown in Figure 4 need not be replicated precisely, either in terms of co-locating all data within the same database, or having the same structural distinctions. A user device can arrange the data in any appropriate manner so long as the general principles mentioned above are adhered to. A more detailed example is given below in relation to Figure 8.

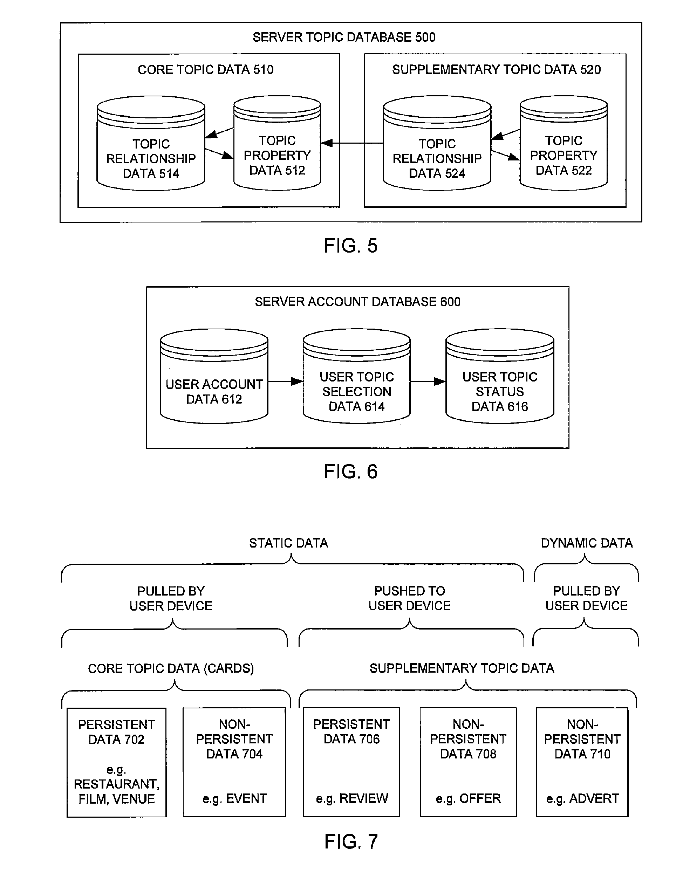

Figure 5 is an overview of the data structure of a server topic database associated with the server of Figure 1. The server topic database 500 has the same structure as the user topic database 400 (though this is not essential). The core topic data portion 510 includes topic property data 512 and topic relationship data 514, and the supplementary topic data 520 portion includes topic property data 524 and topic relationship data 524. In one embodiment the topic property data 512, 522 and topic relationship data 514,524 is stored in a single set of records, and the division into core topic data 510 and supplementary topic data 520 is made dynamically when data is being transmitted to user devices.

Figure 6 is an overview of the data structure of an account database associated with the server of Figure 1. The account database includes user account data (which may for example include authentication data and data associating particular users or user accounts with particular user devices, and so on), user topic selection data 614 (which indicates which cards users have selected for their decks, and the like), and optional user topic status data 616 (which indicates which of the selected cards in a particular user's deck have been successfully downloaded, including any supplementary topic data that may for example have been generated or updated subsequent to the user downloading a related card). The use of the account database can for example allow a user to instantly replicate a particular deck on a different user device (the topic status data 616 may be provided per user device, as in that case, or per user, for more compact data but less flexibility), because the server knows what data is required to be transmitted to the new device.

Figure 7 is an overview of the different types of data in use within the system of Figure 1. As used herein, there are a number of different distinctions which can be drawn between different types of topic data in the system (including, especially, within the user and server topic databases), as illustrated in the figure, and illustrated with example topic data types 702, 704, 706, 708, 710:
- **Pulled / Pushed:** both pulled and pushed data are (in the context of this description) sent to a user device, the difference being that pulled data is requested by the user device and typically sent substantially immediately and/or within the same session (for a connection- or quasi-connection- based protocol), whereas pushed data is unsolicited and sent by the server when the server considers appropriate (for example when new data is available or old data has been updated).
- **Core / Supplementary:** as explained above, core topic data is an essentially self-contained set of data containing (at least) the minimum number of topic properties in order to provide a functional (or useful) display of the topic to a user, whereas supplementary topic data is additional information that has additional use for a user but is not normally considered essential for the operation of the topic-viewing app used by the user. In the preferred embodiment, the core topic data is arranged into 'cards' with one card per topic (and cards may relate to any number of different categories of topic).
- **Persistent / Non-Persistent:** in this context, persistent topic data is data which is not normally expected to change (though may do so to reflect changes in reality or restrictions of the commercial service), and which is normally retained indefinitely (until deleted by a user) once downloaded to the user topic database. Non-persistent data is data which is expected to expire, either by a particular time (for example an event will expire once the event has passed), or from a set amount of time from a creation or distibution date (for example an offer may be offered for a limited time only).
- **Static / Dynamic:** in this context, static topic data is data which is retained in at least one database (the server topic database), even though it may or may not be transmitted to and/or stored by a particular user device, and dynamic topic data is topic data which is either generated in realtime/on-the-fly or which is obtained on demand from an external agent system and the like (such as advertisements which may be supplied to a user device whenever a user browses a particular topic.

In a related embodiment (mentioned earlier), a simpler data structure is provided in which core topic data is static, substantially all supplementary data is dynamic, and all data is pulled from at least one server (which may include a 'curated' server holding core topic data, and related 'third party' servers from which data is pulled via API calls or feeds such as RSS, Atom, and so on). Thus the reviews and offers are provided dynamically, for example. In a variant, the same simple data structure is provided, but certain classes and/or portions within particular classes of topic data is 'pushed' to the user device as well as 'pulled' when a 'card' is viewed.

In certain embodiments, the supplementary topic data may only be stored in the user topic database, and is not stored in the server that holds the 'master copy' of the core topic data (or otherwise). This essentially decentralises the supplementary and/or dynamic data, which can reduce the necessary bandwidth to operate the server system, while retaining a reliable and high quality service to provide core topic data to user devices.

Further embodiments and variants are possible with a different distribution of data types to the different embodiments described above.

It will be appreciated that one of the strengths of the present system is the ability to handle all of the data types mentioned above.

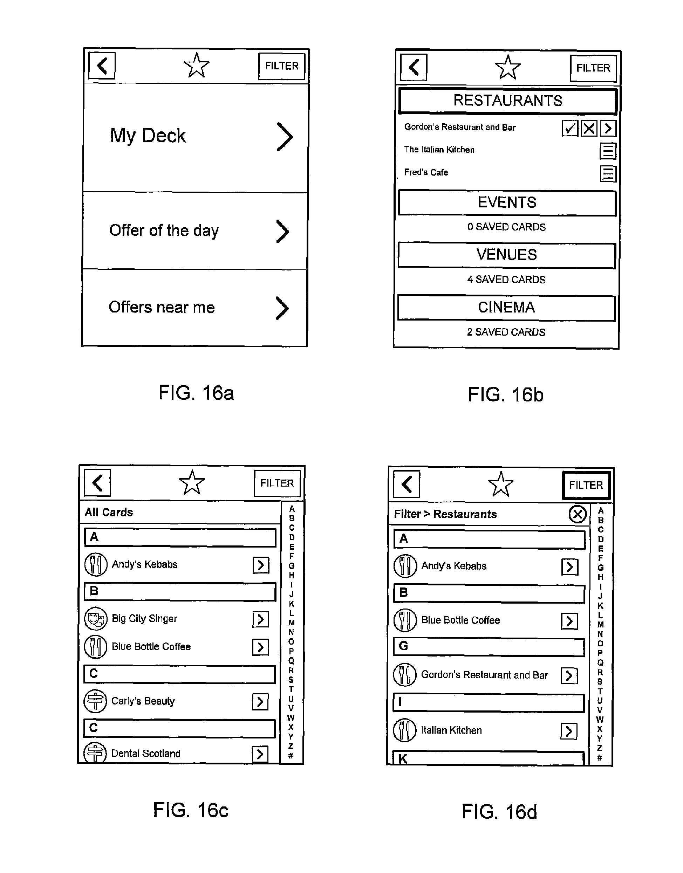

Figure 8 is an overview of the data structure of a typical topic database structure associated with the server of Figure 1. This example relates to a news and information service which amalgamates basic city information with curated reviews and offers. The service is simplified through the use of the deck and cards mentioned above, whereby a user can add a topic of interest to the deck in their user device (or user account which may be synchronised across devices) by a single click on a user interface element, as is explained below in relation to Figures 16 to 22. The use of core topic data allows a functional service to be provided with a minimum of network bandwidth and download times. The supplementary data for a particular topic is initially downloaded as a separate background process in response to the user requesting a card (core topic data) for that topic, but updates and additional topic data can be 'pushed' to the user device as and when required (and in some cases on demand when viewing a topic).

The data structures of Figure 8 are shown divided into persistent and non-persistent categories for ease of reference, though the distinction is essentially conceptual and need not be reflected in the design of the database. Typically each data set in Figure 8 is reflected by at least one database table, but this is merely a choice of implementation.

The data in this preferred embodiment includes venue topic data 810 (each topic instance being a business or other premises at a particular geographical location), restaurant topic data 820 (each instance being a particular restaurant), film topic data 830 (each topic instance being a film or equivalent audio/visual recording), event topic data 840 (each instance being a performance or other event by a particular entity), offer topic data 850 (each instance being a single offer with a particular offering for a particular price), review topic data 860 (each instance being a single review of a particular establishment or entity such as a film), optional advertisement data 870 (each instance being a single advertisement for delivery to a user device in relation to particular criteria which may be pre-defined or determined in realtime), as well as film-to-venue relationship data 832 (each instance being a relation between a particular film and a particular venue) and event-to-venue relationship data 842 (each instance being a relation between a particular event and a venue where the event is due to take place).

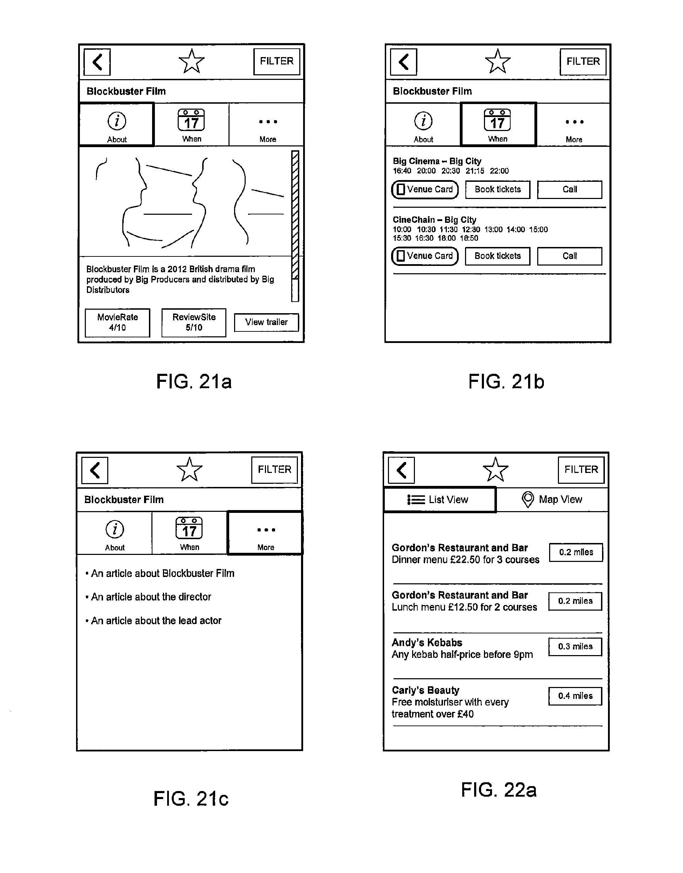

Additional data (not shown) is provided (for example within the film-to-venue relationship data 832) to indicate the film times for a particular film at a particular venue (see Figure 21b for example).

In the preferred embodiment, the restaurant topic data is defined as follows:

**Table 1: Typical topic data for 'restaurant' topic**

| **Core data** | **Supplementary data** |
|---|---|
| Title (name of establishment) | Latest offers |
| Image of establishment | Latest reviews |
| Description of establishment | Links to editorial / web content |
| Address | What's near here (other restaurants / events within a particular radius) |
| Phone number | Advertisements |
| Web address (if present) | Sponsor message (from owners of establishment) |
| Basic information such as whether child friendly or has disabled access | |
| Rating | |

In addition, functionality is built into the system to allow bookings to be made in-app on the user device. On pressing a 'Make booking' button, a topic identifier associated with the selected topic is output by the app and transmitted with any necessary additional information (such as user details which can be furnished for example by the user device or by the server with reference to the account database) to a remote booking service which can then process payment details and the like. Booking details (such as a calendar appointment) can then be returned to the user device or server for appropriate further processing.

Further functionality is provided to provide interactive (or otherwise) maps in-app, to provide directions (for example using information obtained from the user device such as the device's current location), and so on. The user can edit notification options for dynamic content, such as updates and new reviews, offers, and so on.

Yet further functionality is provided to identify other topics (of the same category, that is, restaurants, or otherwise) which are in the vicinity, either of the selected topic (restaurant) or of the user device (user). This can be done using the data stored within the user device (that is, limited to the 'cards' which the user has already downloaded), or more preferably is undertaken by sending a request to the server, which returns all relevant results, filtered by the user as desired, including topics (cards) which have not yet been downloaded or viewed.

The event topic data is defined as follows:

**Table 2: Typical topic data for 'event' topic**

| **Core data** | **Supplementary data** |
|---|---|
| Title (name of event) | (optional) Reviews |
| Image of event | Links to editorial / web content |
| Description of event | What's near here (other restaurants / events within a particular radius of venue) |
| Venue where event taking place | Advertisements |
| Reference to Venue card (topic ID) | Sponsor message (from owners of venue or management of event) |
| Venue address | |
| Venue phone number | |
| Event schedule (when event is on) | |

As is explained elsewhere, it will be appreciated that the event topic data duplicates parts of the venue data (see below), in particular the venue address and phone number, so as to avoid the need to load the venue topic data when displaying details of the event to a user.

The venue topic data is defined as follows:

**Table 3: Typical topic data for 'venue' topic**

| **Core data** | **Supplementary data** |
|---|---|
| Title (name of venue) | Latest offers |
| Image of venue | Latest reviews |
| Description of venue | Links to editorial / web content |
| Address | What's near here (other restaurants / events within a particular radius) |
| Phone number | Advertisements |
| Web address (if present) | Sponsor message (from owners of establishment) |
| Venue schedule (what's on) | |
| References to Event cards (topic ID) or Film cards (topic ID) relating to venue schedule | |

The movie (film) topic data is defined as follows:

**Table 4: Typical topic data for 'movie' topic**

| **Core data** | **Supplementary data** |
|---|---|
| Title (name of movie) | Latest reviews |
| Image of movie | Links to editorial / web content |
| Description of movie | Advertisements |
| Basic movie info - rating, lead actor, genre, review number | Sponsor message (from owners of venue or movie distributors) |
| Link to trailer of the movie | |
| List of venues where movie being shown | |
| Reference to Venue cards (topic ID) | |
| Booking data for each venue | |
| Telephone contact data for each venue | |
| List of film start times for each venue | |

Functionality can be provided to play the movie trailer in-app when selected, for example.

Different and additional properties to those given in Tables 1-4 may of course be provided.

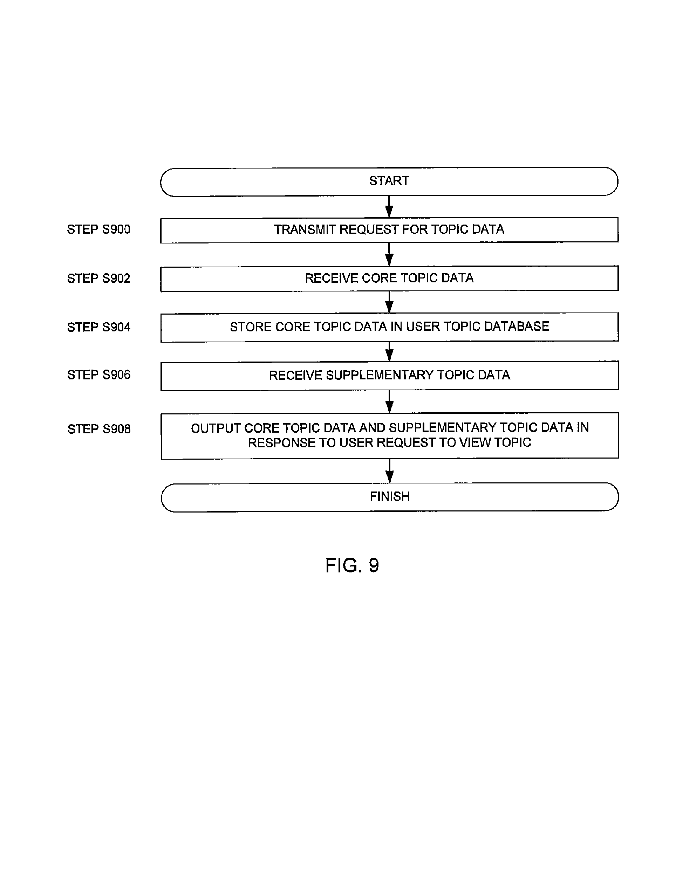

Figure 9 is a flowchart illustrating the operation of one aspect of a user device of Figure 1. This flowchart illustrates the process by which topic data is transmitted to a user device for viewing by a user of the device. The flowchart begins (S900) when the user device transmits a request for topic data relating to a selected topic. The core topic data is received (S902) by the user device from the server, and then stored (S904) in the user topic database local to the user device. In a step (S906) that may be repeated any number of times or even omitted (if there is no supplementary data associated with a particular topic), supplementary topic data is received in relation to the selected topic.

The supplementary data may be received out-of-turn if, for example, several requests for topic data are pending; the core topic data is typically transmitted immediately in response to the request, but the supplementary data may be delayed. As noted above in relation to Figure 7, the supplementary data may include various classes of data, including persistent data such as existing review data that is scheduled for transmission on receipt of the request from the user device for the topic data, non-persistent data such as special offers, as well as data such as advertisements and real-time information that may be transmitted to the user at a later stage, for example whenever the user opens a card relating to the topic in question. Delays may also be incurred in the transmission of supplementary data on account of lower priority channels or protocols typically being used for the transmission, relative to those used for the core topic data (which is sent using a higher priority).

In step S908, when a user accesses a card (topic), the user device outputs both the core topic data and the supplementary topic data (if present) in order to provide all relevant information. If the supplmentary topic data is not (yet) present, then a reduced but still functional display can be provided.

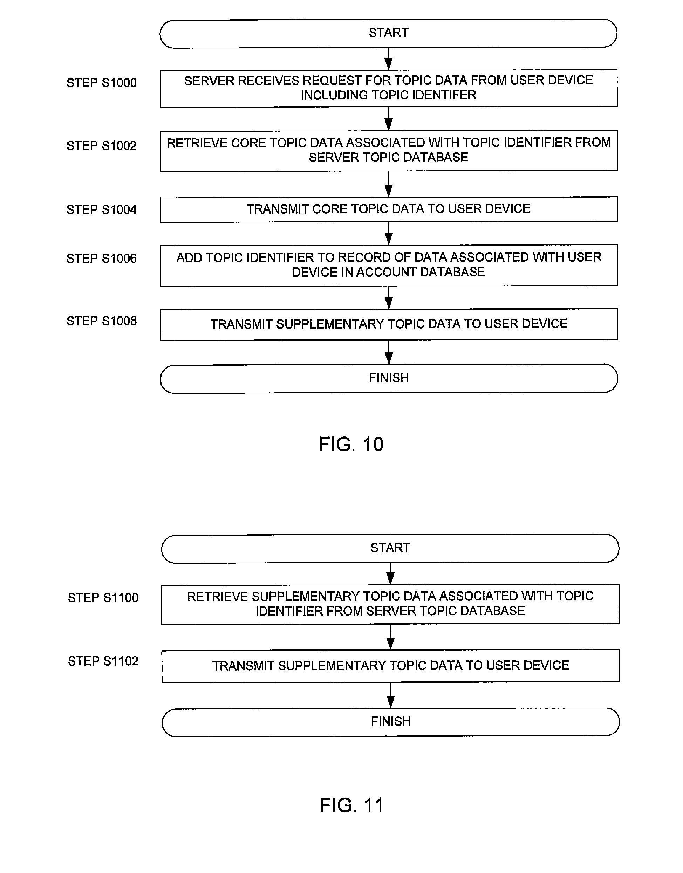

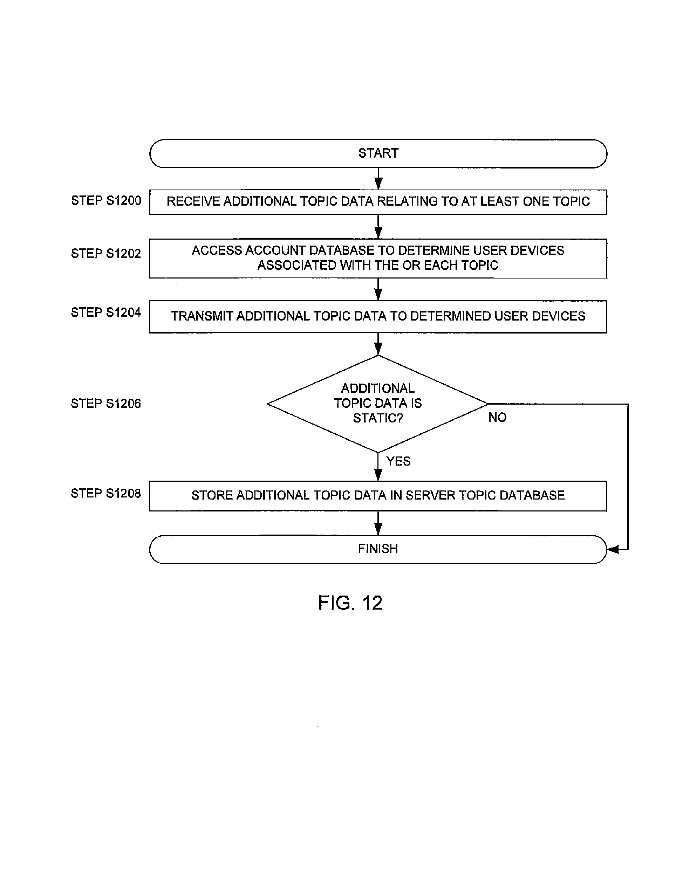

Figure 10 is a flowchart illustrating the operation of one aspect of the server of Figure 1, essentially the mirror of the process illustrated in Figure 9. In step S1000 the server receives a request for topic data from the user device, the request including a topic identifier to enable the server to locate the relevant portion of topic data. The server retrieves (S1002), or in some cases generates, core topic data associated with the supplied topic identifier from the server topic database. The core topic data is then transmitted (S1004) to the user device, and the server adds (S1006) the topic identifier to the record in the account database of data associated with the user device. Supplementary topic data is then transmitted (S1008), sequentially after the transmission of the core topic data and/or at a later stage in response to (for example) new or updated topic data being provided, as explained in more detail with reference to Figures 11 and 12, illustrating these alternatives.

Figure 11 is a flowchart illustrating the operation of one instance of step S1008 of Figure 10. In this case, supplementary topic data associated with the supplied topic identifier is retrieved (or may be generated) from the server topic database in step S1100. The supplementary topic data is then transmitted (S1102) to the user device.

Figure 12 is a flowchart illustrating the operation of another instance of step S1008 of Figure 10. In step S1200, the server receives additional (new or updated) topic data relating to at least one topic, for example from external agents such as review sites and so on. The server accesses (S1202) the account database to determine which user devices are associated with the topic(s) to which the additional topic data relates. The additional topic data is then transmitted (S1204) to the relevant devices so that they can update their data or display the new data as required. If the additional topic data is static (S1206), as defined above, then the additional topic data is stored (S1208) in the server topic database.

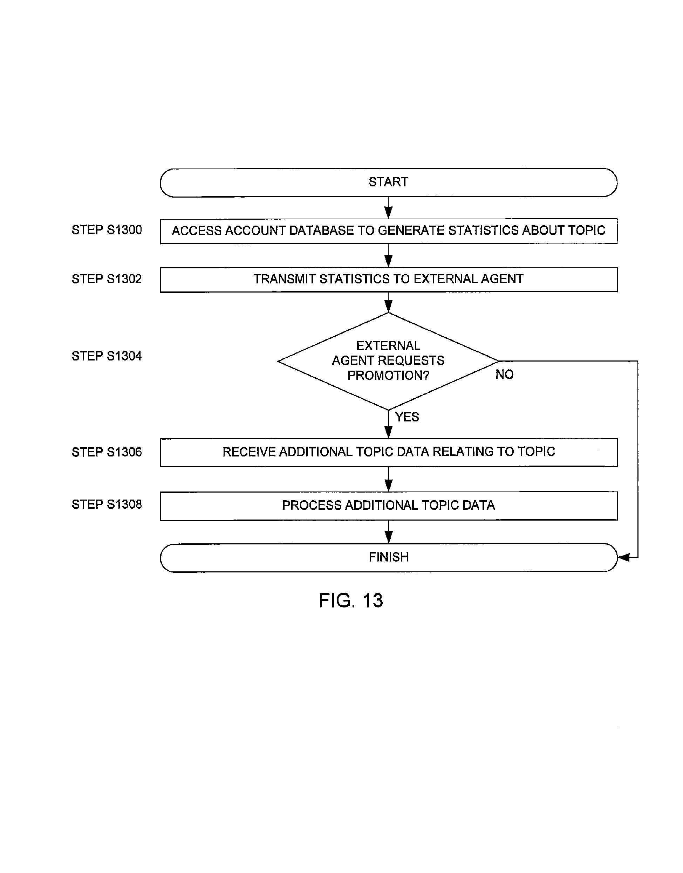

Figure 13 is a flowchart illustrating the interaction between the server and the external agent system of Figure 1. This flowchart illustrates a process by which entities related to a particular topic are given a chance to 'sponsor' the topic for at least some of the users who are accessing the particular topic. The sponsors and their messages can vary over time, for example as a result of contracts or auctions of the sponsorship opportunity, which may in turn depend on how many users have added the card for the relevant venue, restaurant, event, and so on.

In step S1300 the account database is accesssed to generate statistics about a particular topic, such as how many users have added the topic as a 'card' in their 'deck'. The statistics (which are preferably fully anonymised) are transmitted (S1302) to an external agent system, which may belong to or be able to communicate with the relevant entities. If a request is received to provide a promotion (S1304), then additional topic data may then be received (S1306) from the external agent system or otherwise, and the data is then processed (S1308) as outlined in Figure 12 as described above.

The notification process described above may for example be triggered by certain factors, such as the number of cards downloaded exceeding a predetermined threshold, and the like.

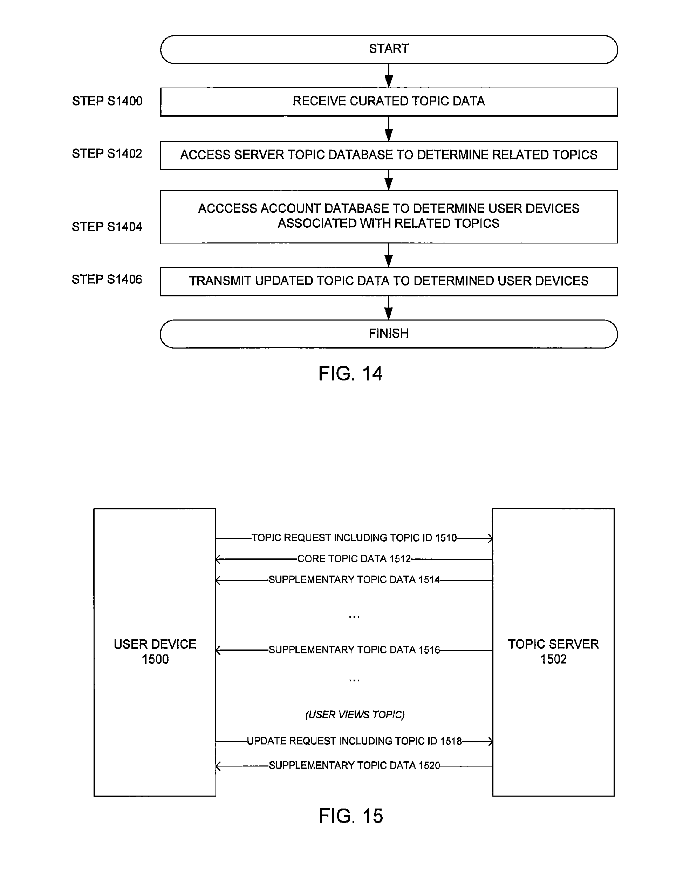

Figure 14 is a flowchart illustrating the interaction between the server and the curation system of Figure 1. The curation system may be used, for example, to filter promotions and other topic data arriving from outside the server, or to create or update topic data directly, for example by writing descriptions of topics, reviews, entering special offers, and so on.

In step S1400, curated topic data is received by the server. The server topic database is accessed (S1402) to determine topics related to the curated data, then the account database is accessed (S1404) to determine user devices associated with the related topics. Updated topic data is then transmitted (S1406) to the user devices in question.

Figure 15 is a process diagram illustrating, for ease of reference, the data transmissions between a user device and the server of Figure 1. These transmissions between the user device 1500 and server 1502 are the result of some of the processes described above with reference to Figures 9 to 14. First, a topic request is sent (1510), and core topic data (1512) and a first tranche of supplementary topic data (1514) are sent in return. The supplementary data is typically sent using a lower priority communications protocol but normally will arrive not too long after the core topic data. Later on, which may for example be after core topic data and supplementary topic data has been sent and received in respect of other topics (not shown), new or updated topic data relating to the topic in question is received by the server 1502 as described above, and is transmitted (1516) to the user device. Later on again, when a user views the topic in question, an update request may be sent (1518) in respect of which yet further supplementary topic data (1520) may be sent, for example including real-time or advertisement data.

Figures 16a to 16d are exemplary screenshots of an application running on the user device of Figure 1, showing a user interface for browsing topics (the deck). It will be noted that different arrangements are possible, and the effect of filtering the cards (or not) is shown with reference to Figures 16c and 16d.

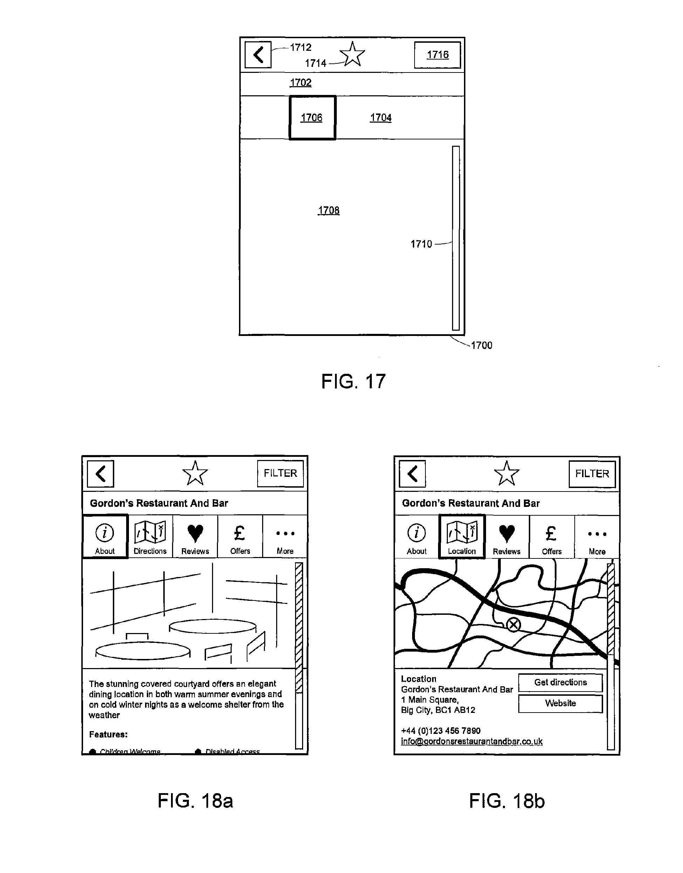

Figure 17 is a schematic showing a typical arrangement of topic displays provided by an application running on the user device of Figure 1. The user interface screen 1700 includes a title area 1702, a topic sub-category bar 1704 including a highlight for the currently selected tab 1706, as well as a main information window 1708 including a scroll bar 1710 where needed.

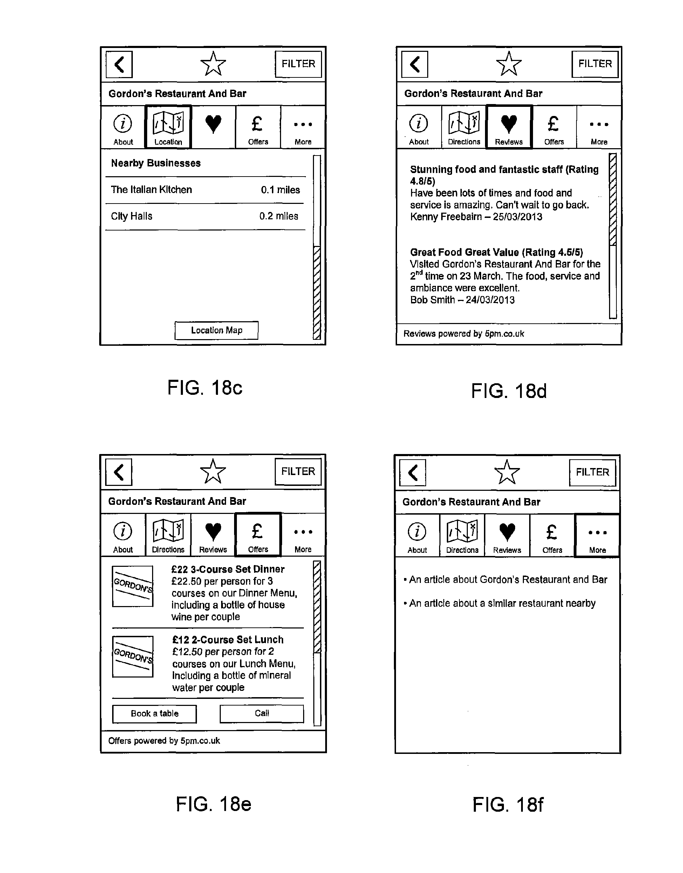

Figures 18a to 18f are exemplary screenshots of an application running on the user device of Figure 1, showing a user interface for browsing restaurant topics. It will be noted that in Figures 18a and 18b, part of the information window is hidden and can be revealed by using the scroll bar (for example by a user gesture, depending on the particular implementation and hardware). Figure 18c shows the window of Figure 18b as scrolled down to the bottom to reveal nearby businesses. It will be appreciated that the reviews and offers shown in Figure 18d and 18e rely on supplementary topic data, and may be blanked out or otherwise made unavailable in the time before the arrival of the supplementary data; the topic remains otherwise completely useable and browseable. Over time, more reviews and offers may be received and will automatically be updated in the screens of Figures 18d and 18e, and some offers may also be deleted once they expire, which is typically determined by a time stamp in the offer data and a policy, which may be incorporated also in the offer topic data, governing when - in relation to the time stamp - the offer should be deleted from the database.

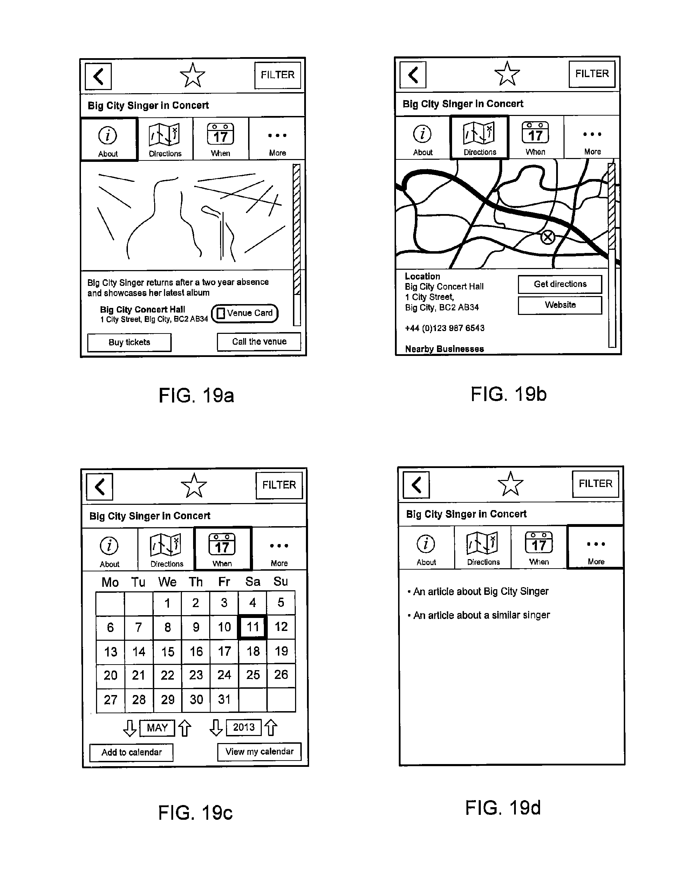

Figures 19a to 19d are exemplary screenshots of an application running on the user device of Figure 1, showing a user interface for browsing event topics. It will be noted in Figure 19a that a link is provided to a venue card for the venue relating to the event (there may be multiple venues and venue cards shown as applicable). A single tap (or other user input) in relation to the venue card will trigger the process shown in Figure 9, and will cause the selected card to be added to the deck (user topic database). Then, or subsequently, tapping the card will redirect the display to the relevant venue card. Other implementations of the user interface are of course possible.

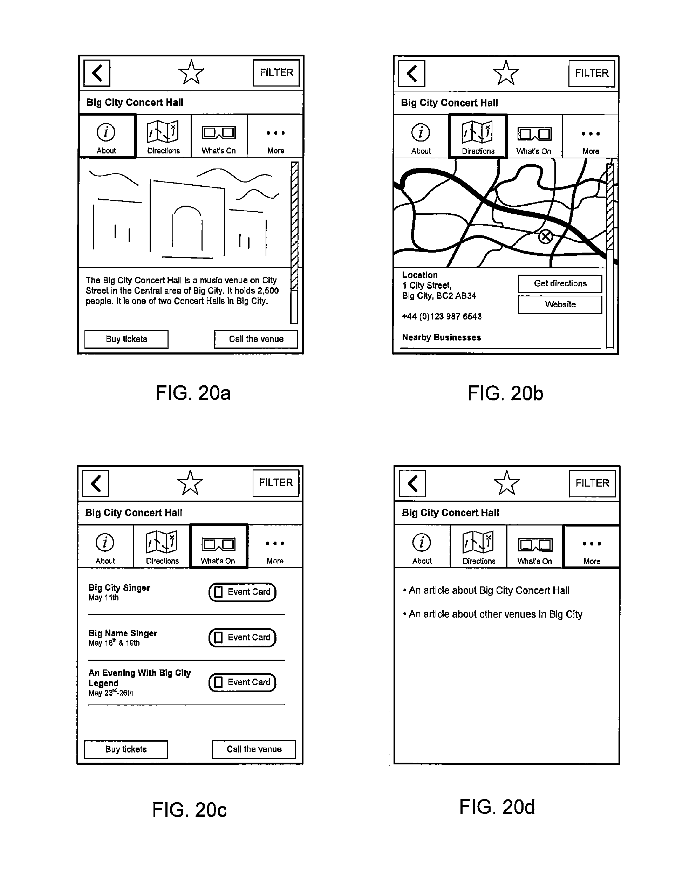

Figures 20a to 20d are exemplary screenshots of an application running on the user device of Figure 1, showing a user interface for browsing venue topics. It will be noted that event cards, equivalent in functionality to the venue card described above, are shown in Figure 20c.

Figures 21 a to 21 c are exemplary screenshots of an application running on the user device of Figure 1, showing a user interface for browsing film topics. The venue cards are again noted in Figure 21b, as well as buttons which have associated functionality that interacts with the topic data (including contact details and the like) to carry out set tasks in relation to the topics.

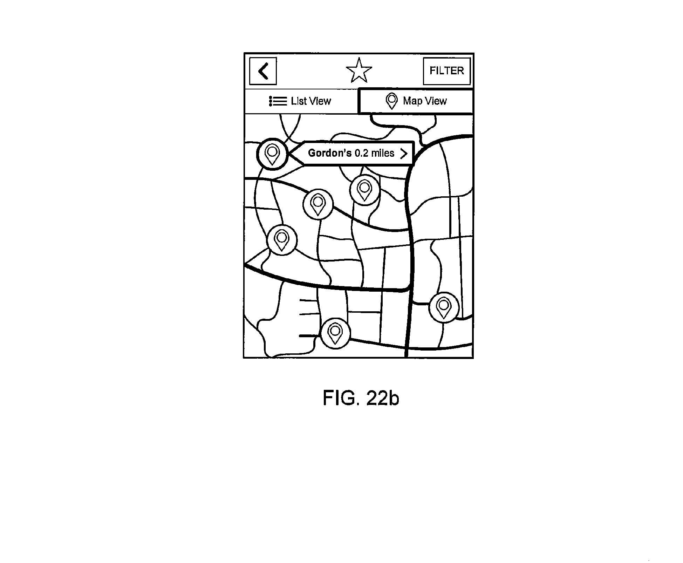

Figures 22a and 22b are exemplary screenshots of an application running on the user device of Figure 1, showing a user interface for browsing nearby topics. These screens illustrate the use of geolocation and server requests to facilitate the navigation of topics in the vicinity of a user (or otherwise).

The topic data can be 'geofenced' as appropriate. For example a user-specified setting or a determined geographical location may cause topics to be limited to a particular geographical area. If a user has stored topics in relation to a number of different cities, for example, then the user device may automatically filter topics to within the current detected city, and so on.

Reviews may also be added by users, for example using the app, as well as being curated using the curation system. User reviews may in addition be curated before being released. Other forms of user feedback are of course possible, and may be provided to the server or other part of the system.

In further examples of how the system can be used and/or modified: as a specific event approaches, the system may send a user reminders and/or related cards to remind them. If a user shows interest in a topic (such as a film, for example) in advance of launch they might for example be given reminders that it is being launched on a particular day, and so on. In the case of a card for a cinema, a user may be notified that a new film is coming out, and so on (for example by sending a card relating to the film).

In a variant of the preferred embodiment, 'gamification' mechanics are provided in the system, including mechanics such as randomly assigning 'golden cards' that can deliver prizes to a selected user when they add the "lucky card' to their deck. Other game mechanics are of course possible.

Although the present invention has been described above with reference to specific embodiments, it will be apparent to a skilled person in the art that modifications lie within the spirit and scope of the present invention.

## Claims

1. A computer-implemented method of operating a user device to access data relating to at least one of a plurality of topics, the method comprising:
transmitting from the user device a request for topic data, the request including a topic identifier identifying a selected topic from said plurality of topics;
receiving at the user device, in response to the request for topic data, core topic data defining at least one property of the selected topic;
storing the core topic data in a topic database associated with the user device;
receiving at the user device supplementary topic data associated with at least the selected topic; and
in response to a request to access the selected topic, outputting the core topic data and the supplementary topic data.

2. A method according to Claim 1, further comprising receiving selection data identifying a selected topic from said plurality of topics, and wherein the request for topic data is transmitted in response to receiving the selection data.

3. A method according to Claim 1 or 2, wherein the core topic data is sufficient to allow the user device to provide a first level of user interaction with the selected topic, and the supplementary topic data is sufficient to allow the user device to provide a second level of user interaction with the selected topic.

4. A method according to any preceding claim, further comprising transmitting a request for updated topic data in response to the request to access the selected topic, the request for updated topic data including the topic identifier.

5. A method according to any preceding claim, further comprising receiving updated core topic data and storing the updated core topic data in the user topic database.

6. A method according to any preceding claim, further comprising determining topic data that has expired, and accessing the user topic database to delete the determined expired topic data.

7. A computer-implemented method of operating a server to control data relating to at least one of a plurality of topics, the method comprising:
receiving from a user device a request for topic data, the request including a topic identifier identifying a selected topic from said plurality of topics;
accessing a server topic database to extract core topic data associated with the topic identifier and defining at least one property of the selected topic;
transmitting the core topic data to the user device;
storing the topic identifier in an account database in relation to a portion of the database associated with the user device;
processing additional topic data to determine supplementary topic data associated with at least the selected topic; and
transmitting the supplementary topic data to the user device.

8. A method according to Claim 7, wherein the additional topic data includes at least one of data stored in the server topic database and external topic data received from an external agent.

9. A method according to Claim 7 or 8, further comprising receiving a request for updated topic data, the request for updated topic data including the topic identifier.

10. A method according to any one of Claims 7 to 9, further comprising storing data in the account database to indicate that at least one of the core topic data and supplementary topic data has been received by the user device.

11. A method according to any preceding claim, wherein the supplementary topic data contains at least one reference to the core topic data.

12. A method according to any preceding claim, wherein the core topic data comprises at least one reference to another topic, and further comprises at least one property extracted from the topic data associated with said other topic.

13. A method according to any preceding claim, wherein the core topic data is sent in a first transmission, and the supplementary data is sent in a second transmission, wherein the first transmission and second transmission may be prioritised to give the first transmission a higher priority than the second transmission, and at least one of the first and second transmissions may be divided into further transmissions.

14. A method according to any preceding claim, wherein the supplementary topic data relates to at least one topic other than the selected topic, which is preferably a different category of topic to the selected topic, and the supplementary topic data may include at least one topic property and topic relationship data, the topic relationship data including an association between said at least one topic and at least the selected topic.

15. A system including:
a user device comprising a processor and associated data storage, the data storage including computer program code and the processor being operable to execute said computer program code so as to carry out the method of any one of Claims 1 to 6; and
a server comprising a processor and associated data storage, the data storage containing computer program code and the processor being operable to execute said computer program code so as to carry out the method of any one of Claims 7 to 10.
